# EUROPEAN PATENT SPECIFICATION

(11) **EP 2 565 501 B1**
(45) Date of publication and mention of the grant of the patent: **11.10.2017**
(21) Application number: 11774712.1
(22) Date of filing: 08.03.2011
(51) Int. Cl.: F16K 7/12, F16J 3/02, F16K 1/30, F16K 27/00, F16K 7/16

(54) **VALVE FOR CONTAINER FILLED WITH HALOGEN GAS OR HALOGEN COMPOUND GAS**
VENTIL FÜR EINEN MIT HALOGENGAS ODER EINEM HALOGENVERBINDUNGSGAS GEFÜLLTEN CONTAINER
CLAPET POUR RÉCIPIENT REMPLI DE GAZ HALOGÈNE OU DE COMPOSÉ HALOGÉNÉ GAZEUX

(30) Priority: 02.02.2011 JP 2011020867; 28.04.2010 JP 2010102870
(43) Date of publication of application: 06.03.2013
(73) Proprietor: Central Glass Company, Limited, Yamaguchi 755-0001 (JP); Neriki Valve Co., Ltd., Hyogo (JP)
(72) Inventor: UMEZAKI, Tomonori, Yamaguchi 755-0001 (JP); TANAKA, Kenji, Yamaguchi 755-0001 (JP); YAO, Akifumi, Yamaguchi 755-0001 (JP); MIYAZAKI, Tatsuo, Yamaguchi 755-0001 (JP); MORI, Isamu, Tokyo 101-0054 (JP); KAWASHIMA, Tadayuki, Tokyo 101-0054 (JP); TAKEDA, Masaru, Amagasaki, Hyogo (JP); MIYAZAKI, Koji, Amagasaki, Hyogo (JP); KAMINAGA, Koichi, Amagasaki, Hyogo (JP); SAJI, Koichi, Amagasaki, Hyogo (JP)
(74) Representative: Manitz Finsterwald Patentanwälte PartmbB
(86) International application number: PCT/JP2011/055320
(87) International publication number: WO 2011/135928

(56) References cited:
- JP-A- 9 178 005
- JP-A- 2004 060 741
- US-A- 4 953 826
- US-A1- 2004 261 866
- US-A1- 2005 109 973
- US-B2- 7 191 793

## Description

### Technical Field

The present invention relates to a direct-touch diaphragm valve for use in a container filled with halogen gas or halogen compound gas.

### Background Art

Fluorine gas plays an important role in substrate etching processes during manufacturing of semiconductor devices, MEMS devices, TFT panels for liquid crystal displays, solar cells and the like and as cleaning process gas in thin-film forming equipment such as CVD devices.

In one fluorine gas supply method, fluorine gas is filled in a cylinder at high pressure and supplied to e.g. a semiconductor manufacturing system from the cylinder through a valve. There is a demand to fill the cylinder with the fluorine gas at high pressure and high concentration because it is possible to decrease the replacement frequency of the cylinder for reductions of cylinder transporting cost and operation load by increasing the filling pressure of the fluorine gas and is possible to perform cleaning process efficiently by using the high-concentration fluorine gas.

Under the above circumstances, Patent Document 1 discloses a valve for supplying high-concentration fluorine gas at high pressure to a semiconductor manufacturing system.

### Prior Art Documents

### Patent Documents

Patent Document 1: Japanese Laid-Open Patent Publication No. 2005-207480

Patent document US 7,191,793 B2 discloses a direct-touch diaphragm valve comprising the features of the preamble of claim 1.

### Summary of the Invention

### Problems to be Solved by the Invention

In the valve of Patent Document 1, a gas flow passage is opened or closed by a sheet disc and hermetically sealed from the outside by a diaphragm so that there is a large dead space where gas tends to reside in a valve chamber. When there is a large dead space where gas tends to reside in the valve chamber, it is likely that the inner temperature of the valve chamber will increase by adiabatic compression upon the introduction of high-pressure high-concentration fluorine gas into the valve chamber. The inside of the valve chamber becomes more susceptible to surface corrosion, resin deterioration etc. as the inner temperature of the valve chamber increases. The resulting surface corrosion product is adhered to the inside of the valve chamber (in particular, to the valve seat). This makes it likely that gas leakage will occur in the valve due to poor gas tightness.

As mentioned above, in the case of supplying highly corrosive halogen-containing gas such as fluorine gas through the valve, the inside of the valve is susceptible to surface corrosion by the corrosive gas whereby it is difficult to maintain the gas tightness of the valve due to the adhesion of the corrosion product to the surface of the valve seat.

In view of the foregoing, it is an object of the present invention to provide a valve having sufficient gas tightness for use in a halogen gas- or halogen compound gas-filled container.

### Means for Solving the Problems

As a result of extensive researches, the present inventors have found that it is possible to improve the gas tightness of a diaphragm valve by controlling, at contact surfaces of a valve seat and a diaphragm of the diaphragm valve, a surface roughness of the contact surface of the valve seat, a curvature radius of the contact surface of the valve seat and the ratio of an area of the contact surface of the valve seat with the diaphragm to a gas contact surface area of the diaphragm to within respective given ranges. The present invention is based on this finding.

According to a first aspect of the present invention, there is provided a direct-touch diaphragm valve, comprising: a valve body having inlet and outlet passages and allowing flow of halogen gas or halogen compound gas therethrough; a valve chamber being in communication with the inlet and outlet passages; a valve seat located around an open inner end of the inlet passage; a diaphragm arranged on the valve seat so as to hermetically seal the valve chamber and open or close the inlet and outlet passages; a stem adapted to move a center portion of the diaphragm downwardly; and a driving unit adapted to move the stem in a vertical direction, wherein the valve seat and the diaphragm have respective contact surfaces formed therebetween such that: the contact surface of the valve seat has a surface roughness Ra of 0.1 to 10.0 µm and a curvature radius Ra of 100 to 1000 mm; and the area ratio Sb/Sa of a contact area Sb of the valve seat with the diaphragm to a gas contact surface area Sa of the diaphragm ranges from 0.2 to 10%.

Preferably, the diaphragm has a longitudinal elastic modulus of 150 to 250 GPa in the above valve. The above valve can be used for attaching to a cylinder container filled with fluorine gas at a concentration of 20 to 100 vol% and a pressure of 0 to 14.7 MPaG as the halogen gas.

According to a second aspect of the present invention, there is provided a gas-filled container comprising the above valve.

### Brief Description of the Drawing

FIG. 1 is an overall schematic view of a valve according to one exemplary embodiment of the present invention.
FIG. 2 is an enlarged view showing a valve chamber and its vicinity of the valve of FIG. 1.
FIG. 3 is a cross-section view 1 of the valve chamber of the valve of FIG. 1.
FIG. 4 is a cross-section view 2 of the valve chamber of the valve of FIG. 1.

### Detailed Description of the Embodiments

Hereinafter, exemplary embodiments of the present invention will be described below in detail.

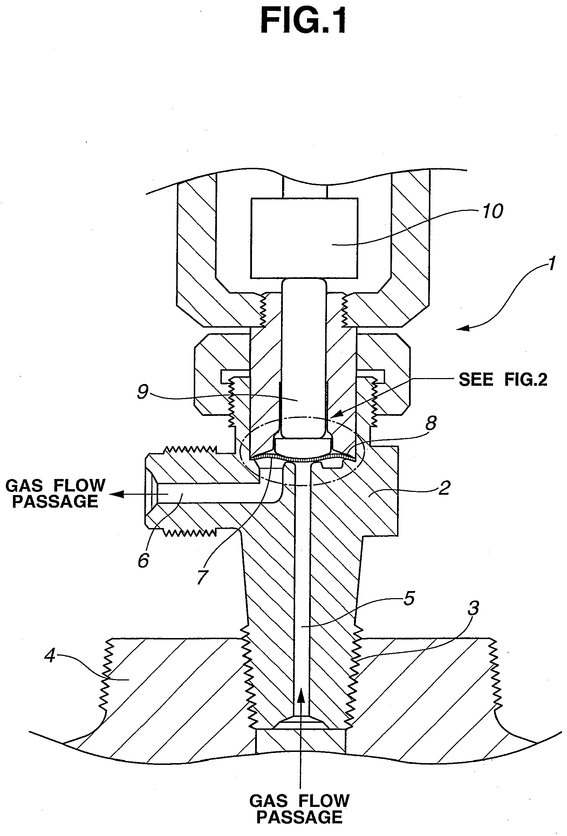

FIG. 1 is a vertical section view of a valve 1 according to one embodiment of the present invention. The valve 1 is designed as a direct-touch diaphragm valve capable of being opened or closed by contact or separation of a diaphragm and a valve seat. Although the direct-touch diaphragm valve is of generally known type, the features of the present invention relate to the structural relationships between the diaphragm and the valve seat of the direct-touch diaphragm valve.

The structure of the valve 1 will be first explained below.

As shown in FIG. 1, the valve 1 includes a valve body 2 having inlet and outlet passages 5 and 6, a valve chamber 7 being in communication with the inlet and outlet passages 5 and 6, a valve seat 12 located around an open inner end of the inlet passage 5, a diaphragm 8 arranged on the valve seat 12 so as to hermetically seal the valve chamber 7 and open or close the inlet and outlet passages 5 and 6, a stem 9 adapted to move a center portion of the diaphragm 8 downwardly and a driving unit 10 adapted to move the stem 9 in a vertical direction. The valve body has a threaded leg portion 3 on a lower part thereof as shown in FIG. 1. A male thread is formed on an outer circumferential surface of the threaded leg portion 3 so that the valve 1 is attached to a gas discharge hole of a gas-filled container 4 by means of the male thread. As a gas flow passage, the inlet passage 5 is formed so as to extend through a lower surface of the threaded leg portion 3. The valve chamber 7 and the outlet passage 6 are formed in this order on a downstream side of the inlet passage 5.

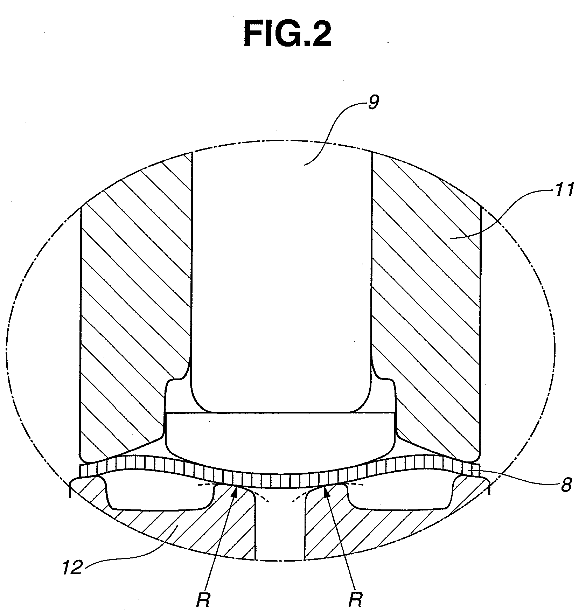

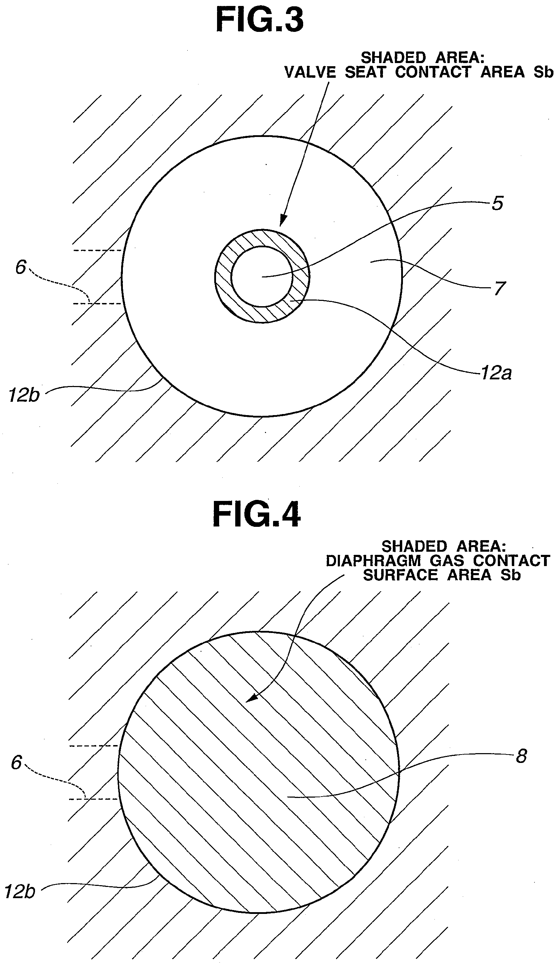

FIG. 2 is an enlarged view of part of FIG. 1 showing the valve chamber 7 and its vicinity in detail. FIGS. 3 and 4 are cross-section views of the valve chamber 7.

As shown in FIG. 2, the inner end of the inlet passage 5 is open and in communication with the valve chamber 7. The valve seat 12 is formed in a concave shape around the open inner end of the inlet passage 5. The diaphragm 8 is arranged on the valve seat 12 such that the center portion of the diaphragm 8 can be brought into contact with or separated from the valve seat 12. The gas tightness of the valve chamber 7 can be maintained by the diaphragm 8 as a circumferential portion of the diaphragm 8 is press-fixed to a circumferential wall of the valve chamber 7 with a valve cap 11.

The stem 9 is mounted to an upper surface of the center portion of the diaphragm 8 so as to bring the diaphragm 8 into contact with the valve seat 12 or separate the diaphragm 8 from the valve seat 12. The driving unit 10 is fixed to an upper end of the stem 9 through a driving shaft so as to operate the stem 9. By such a configuration that: the stem 9 is vertically movably arranged on the diaphragm 8 to move the center portion of the diaphragm 8 downwardly; and the driving unit 10 is arranged to move the stem 9 upwardly or downwardly, the valve 1 allows the diaphragm 8 to be separated from or brought into contact with the valve seat 12 and thereby open or close the gas flow passage. More specifically, the diaphragm 8 is brought into contact with the valve seat 12 by the stem 9 against the upward force of gas pressure and the elastic repulsive force of the diaphragm 8 so as to close the gas flow passage when the stem 9 is pressed downwardly by the application of a driving force from the driving unit 10. When the pressing force on the stem 9 is released, the center portion of the diaphragm 8 is returned to an upwardly convex shape by its elastic action so as to provide communication between the gas inlet passage 5 and the valve chamber 7.

There is no particular limitation on the driving system of the driving unit 10. The driving unit 10 can adopt an air driving system (air actuator system) using air pressure etc., an electric driving system using a motor etc., or a manual system.

A gas-pressure driving system using gas pressure such as air pressure, nitrogen pressure etc. is often adopted as the driving system (driving unit 10) of an ordinary direct-touch diaphragm valve. In the gas-pressure drying system, the driving pressure of air etc. for applying a pressure to the diaphragm 8 is fixed at a constant level (e.g. of the order of 0.5 to 0.7 MPa) so that there is a difficulty in regulating the pressure applied to the diaphragm 8. It is very important to control the contact state between the diaphragm 8 and the valve seat 12 for the hermetic sealing of the valve chamber 7. If the pressure applied to the diaphragm 8 is too high, the diaphragm 8 is more susceptible to breakage or damage. If the pressure applied to the diaphragm 8 is too low, gas leakage is likely to occur due to poor gas tightness.

For these reasons, it is preferable to control the surface contact state between the diaphragm 8 and the valve seat 12 by adjusting a surface area Sa of a gas contact region of the diaphragm 8 and an area Sb of a contact surface 12a of the valve seat 12 for contact with the diaphragm 8 as shown in FIGS. 3 and 4.

More specifically, the gas tightness becomes poor with decrease in the load applied per unit contact surface area if the area ratio Sb/Sa is greater than 10%. On the other hand, the diaphragm 8 and the valve seat 12 become more susceptible to breakage or damage with increase in the load applied per unit contact surface area if the area ratio is smaller than 0.2%. The area ratio Sb/Sa is thus preferably in the range of 0.2 to 10%, more preferably 0.5 to 5% (see the after-mentioned Examples 1 to 5 and Comparative Examples 3 to 5).

In this way, the pressure applied to the diaphragm 8 can be controlled by adjusting the area ratio Sb/Sa. It is therefore possible to prevent gas leakage caused by breakage or damage of the diaphragm 8 or by poor sealing performance, to maintain the smoothness of the contact surfaces of the diaphragm 8 and the valve seat 12 and to obtain good gas tightness of the valve 1.

The above-structured valve 1 is suitably applicable to high-pressure fluorine gas or fluorine compound gas. For example, the fluorine compound gas can be either COF₂ or CF₃OF. It is needless to say that the valve 1 is applicable to any other halogen gas or halogen compound gas equivalent in corrosivity to fluorine gas, such as Cl₂, Br₂, HCl, HF, HBr or HF₃.

The attachment of the valve 1 to the gas-filled container 4 and the opening/closing operation (gas flow) of the valve 1 will be next explained below.

To discharge storage gas from the gas-filled container 4, the diaphragm 8 is separated from the valve seat 12 by the operation of the driving unit 10 in the valve 1. Then, the storage gas in the gas-filled container 4 flows into the valve chamber 7 through the inlet passage 5, spreads in the valve chamber 7 along a lower surface (gas contact region) of the diaphragm 8 and is discharged out through the outlet passage 6.

To fill gas into the gas-filled container 4, gas filling equipment (not shown) is connected to the gas outlet passage 6. The gas supplied from the gas filling equipment flows into the valve chamber 7 through the outlet passage 6, flows in the valve chamber 7 along the lower surface (gas contact region) of the diaphragm 8, and then, is filled into the gas-filled container 4 through the inlet passage 5.

At the time of mounting the gas-filled container 4 onto e.g. a semiconductor manufacturing system, the air remaining inside the valve chamber 7 and the outlet passage 6 is removed by inert gas purging and vacuum evacuation. More specifically, vacuum evacuation equipment (not shown) is connected to the gas outlet passage 6, with the valve chamber 7 being closed. The gas inside the outlet passage 6 and the valve chamber 7 is then sucked in by the vacuum evacuation equipment. Purge gas feeding equipment (not shown) is next connected to the outlet passage 6. Inert gas such as nitrogen gas is fed as purge gas from the purge gas feeding equipment into the valve chamber 7 through the outlet passage 6. This purge gas spreads throughout the valve chamber 7 so that the gas and particles remaining inside the valve chamber 7 are mixed and replaced with the purge gas. By repeating the above vacuum evacuation and gas purging operations, the impurities such as oxygen and moisture in the air are sufficiently removed from the valve chamber 7 and the outlet passage 6. After that, the semiconductor manufacturing system is connected to the outlet passage 6.

There is no particular limitation on the gas-filled container 4 to which the valve 1 is attached as long as the gas-filled container 4 has resistance to corrosion by high-pressure gas. Any ordinary gas container can be used as the container 4. In the case of filling high-pressure fluorine gas or fluorine compound gas, the container 4 can be made of e.g. a metal material having fluorine gas corrosion resistance, such as stainless steel, carbon steel or manganese steel.

Further, there is no particular limitation on the material of the valve body 2 as long as the material of the valve body 2 has resistance to corrosion by halogen gas. The valve body 2 can be produced by machining such a material. In the case of using fluorine gas or fluorine compound gas, a metal or alloy containing 0.01 mass% or more and less than 1 mass% of carbon is particularly preferred as the material of the gas contact region of the valve body 2. For the purpose of reducing the influence of adsorption of gas molecules such as moisture and particles on the gas contact region and improving the corrosion resistance of the metal material surface, it is preferable to process the surface of the gas contact region by machine grinding, abrasive grinding, electrolytic polishing, combined electrolytic polishing, chemical polishing, combined chemical polishing or the like.

There is no particular limitation on the material of the diaphragm 8 as long as the material of the diaphragm 8 has resistance to corrosion by halogen gas. Preferably, the material of the diaphragm 8 contains 0.1 mass% or less of carbon, 70 mass% or more of nickel, 0 to 25 mass% of chromium, 0 to 25 mass% of copper, 0 to 25 mass% of molybdenum and 0 to 10 mass% of niobium. For example, Hastelloy or Inconel can be used as the material of the diaphragm 8.

There is also no particular limitation on the material of the valve seat 12. The valve seat 12 can be formed of any metal or resin material having resistance to corrosion by halogen gas. In terms of the influence of adsorption of gas molecules such as moisture and particles, a metal material having halogen gas corrosion resistance is preferred as the material of the valve seat 12.

It is further preferable to more smoothen the lower surface (gas contact region) of the diaphragm 8 and the contact surface of the valve seat 12. In particular, the contact surface 12a of the valve seat 12 for contact with the diaphragm 8 preferably has a surface roughness of 0.1 to 10.0 µm, more preferably 0.2 to 5.0 µm. If the surface roughness of the valve seat contact surface 12a is greater than 10.0 µm, it is likely that adherents will be adhered to the valve seat contact surface 12a and the contact surface of the diaphragm 8. Herein, the term "surface roughness (Ra value)" refers to an arithmetic mean surface roughness according to JIS B0601: 2001 and can be measured by a stylus-type surface roughness tester.

As shown in FIG. 2, it is also preferable that the valve seat contact surface 12a for contact with the lower surface (gas contact region) of the diaphragm 8, when viewed in cross section, has a curved shape with a given curvature radius R. Preferably, the curvature radius R of the valve seat contact surface 12a is in the rage of 100 to 1000 mm, more preferably 150 to 450 mm, as shown in FIG. 2

There is no particular limitation on the process of smoothening the valve seat contact surface 12a for contact with the lower surface (gas contact region) of the diaphragm 8 as long as the valve seat contact surface 12a can be processed to a given surface roughness and curvature radius. It is feasible to process the valve seat contact surface 12a by machine grinding, abrasive grinding, electrolytic polishing, combined electrolytic polishing, chemical polishing, combined chemical polishing or the like.

The diaphragm 8 plays an important role to open and close the gas flow passage of the valve chamber of the valve 1 and control the gas tightness of the valve 1. In order to secure the smooth surface contact and gas tightness between the diaphragm 8 and the valve seat 12, the diaphragm 8 preferably has a longitudinal elastic modulus of 150 to 250 GPa. If the longitudinal elastic modulus of the diaphragm 8 is smaller than 150 GPa, the diaphragm 8 becomes more susceptible to breakage during repeated use etc. because of its strength problem. If the longitudinal elastic modulus of the diaphragm 8 is greater than 250 GPa, it is difficult to obtain good adhesion between the diaphragm 8 and the valve seat 12.

It is preferable to smoothen the surface of the diaphragm 8 for contact with the valve seat 12 by any process as in the case of the surface of the valve seat 12 for contact with the diaphragm 8. Preferably, the surface of the diaphragm 8 for contact with the valve seat 12 has a surface roughness Ra of 0.1 to 10 µm (according to JIS B0601: 2001). There is no particular limitation on the smoothening process of the diaphragm 8 as long as the diaphragm 8 can be processed to a given surface roughness. Further, the thickness of the diaphragm 8 is in the range of e.g. 0.1 to 0.5 mm such that the diaphragm 8 has a given strength.

Furthermore, it is feasible to perform fluorine passivation treatment for the purpose of improving the corrosion resistance of the gas contact regions of the valve. The term "fluorine passivation treatment" herein refers to a treatment process for forming, in advance, a fluorine compound on the material surface by the introduction of fluorine gas. The fluorine corrosion resistance of the material can be improved by forming a thin layer of fluorine compound on the material surface with such fluorine treatment.

### Examples

The present invention will be described in more detail below by way of the following examples. It should be noted that the following examples are illustrative and are not intended to limit the present invention thereto.

In order to examine the gas tightness of the valve 1 according to the above embodiment of the present invention, repeated opening/closing test was conducted on samples of the valve 1 with the use of diluted fluorine gas as halogen gas. The details of the respective examples are indicated below. In the valve 1, an air-pressure driving system using air pressure was adopted in the driving unit 10 to drive the stem 9 for opening/closing operation of the diaphragm 8. Herein, the term "roller burnishing" refers to a known process of moving a roller under pressure over a surface of a metal material etc. so as to smoothen the surface roughness of the metal material without removing a surface layer of the metal material.

### [Example 1]

Provided was a diaphragm valve in which: a housing (valve body) was formed of SUS304; a valve seat was formed by roller burnishing with a surface area Sb of 0.05 cm², a surface roughness Ra of 0.8 µm and a curvature radius R of 200 mm; and a diaphragm was formed of Inconel (longitudinal elastic modulus: 207 GPa) with a gas contact surface area Sa of 2.25 cm². This diaphragm valve was connected to a 47-L Mn steel container. The container was filled with 20% F₂/N₂ gas at a pressure of 10.0 MPaG. After the filling, the diaphragm valve was connected to vacuum gas replacement equipment. The diaphragm valve was subjected to 3000 opening/closing test cycles of being sealed with the gas, closed and subjected to vacuum replacement. The inside of the container was replaced with 5.0 MPaG of helium gas after the above test cycles. The amount of leakage from through the valve was determined by a leak detector to be 1×10⁻⁸ Pam³/s or less. It was confirmed by the test result that there was no leakage from the valve.

### [Example 2]

Provided was a diaphragm valve in which a housing (valve body) was formed of SUS304; a valve seat was formed by roller burnishing with a surface area Sb of 0.02 cm², a surface roughness Ra of 0.8 µm and a curvature radius R of 200 mm; and a diaphragm was formed of Hastelloy (longitudinal elastic modulus: 205 GPa) with a gas contact surface area Sa of 2.25 cm². This diaphragm valve was connected to a 47-L Mn steel container. The container was filled with 20% F₂/N₂ gas at a pressure of 14.7 MPaG. After the filling, the diaphragm valve was connected to vacuum gas replacement equipment. The diaphragm valve was subjected to 3000 opening/closing test cycles of being sealed with the gas, closed and subjected to vacuum replacement. The inside of the container was replaced with 5.0 MPaG of helium gas after the above test cycles. The amount of leakage from through the valve was determined by a leak detector to be 1×10⁻⁸ Pam³/s or less. It was confirmed by the test result that there was no leakage from the valve.

### [Example 3]

Provided was a diaphragm valve in which: a housing was formed of SUS316; a valve seat was formed by roller burnishing with a surface area Sb of 0.0065 cm², a surface roughness Ra of 0.8 µm and a curvature radius R of 200 mm; and a diaphragm was formed of Hastelloy (longitudinal elastic modulus: 205 GPa) with a gas contact surface area Sa of 2.25 cm². This diaphragm valve was connected to a 47-L Mn steel container. The container was filled with 20% F₂/N₂ gas at a pressure of 14.7 MPaG. After the filling, the diaphragm valve was connected to vacuum gas replacement equipment. The diaphragm valve was subjected to 3000 opening/closing test cycles of being sealed with the gas, closed and subjected to vacuum replacement. The inside of the container was replaced with 5.0 MPaG of helium gas after the above test cycles. The amount of leakage from through the valve was determined by a leak detector to be 1×10⁻⁸ Pam³/s or less. It was confirmed by the test result that there was no leakage from the valve.

### [Example 4]

Provided was a diaphragm valve in which: a housing was formed of SUS304; a valve seat was formed by roller burnishing with a surface area Sb of 0.05 cm², a surface roughness Ra of 0.2 µm and a curvature radius R of 200 mm; and a diaphragm was formed of Hastelloy (longitudinal elastic modulus: 205 GPa) with a gas contact surface area Sa of 2.25 cm². This diaphragm valve was connected to a 47-L Mn steel container. The container was filled with 20% F₂/N₂ gas at a pressure of 10.0 MPaG. After the filling, the diaphragm valve was connected to vacuum gas replacement equipment. The diaphragm valve was subjected to 3000 opening/closing test cycles of being sealed with the gas, closed and subjected to vacuum replacement. The inside of the container was replaced with 5.0 MPaG of helium gas after the above test cycles. The amount of leakage from through the valve was determined by a leak detector to be 1×10⁻⁸ Pam³/s or less. It was confirmed by the test result that there was no leakage from the valve.

### [Example 5]

Provided was a diaphragm valve in which: a housing was formed of SUS304; a valve seat was formed by roller burnishing with a surface area Sb of 0.05 cm², a surface roughness Ra of 0.8 µm and a curvature radius R of 200 mm; and a diaphragm was formed of Hastelloy with a gas contact surface area Sa of 2.25 cm². This diaphragm valve was connected to a 47-L Mn steel container. The container was filled with 20% F₂/N₂ gas at a pressure of 10.0 MPaG. After the filling, the diaphragm valve was connected to vacuum gas replacement equipment. The diaphragm valve was subjected to 3000 opening/closing test cycles of being sealed with the gas, closed and subjected to vacuum replacement.

The inside of the container was replaced with 5.0 MPaG of helium gas after the above test cycles. The amount of leakage from through the valve was determined by a leak detector to be 1×10⁻⁸ Pam³/s or less. It was confirmed by the test result that there was no leakage from the valve.

### [Example 6]

Provided was a diaphragm valve in which: a housing (valve body) was formed of SUS304; a valve seat was formed by roller burnishing with a surface area Sb of 0.05 cm², a surface roughness Ra of 0.8 µm and a curvature radius R of 350 mm; and a diaphragm was formed of Inconel (longitudinal elastic modulus: 207 GPa) with a gas contact surface area Sa of 2.25 cm². This diaphragm valve was connected to a 47-L Mn steel container. The container was filled with 20% F₂/N₂ gas at a pressure of 10.0 MPaG. After the filling, the diaphragm valve was connected to vacuum gas replacement equipment. The diaphragm valve was subjected to 3000 opening/closing test cycles of being sealed with the gas, closed and subjected to vacuum replacement. The inside of the container was replaced with 5.0 MPaG of helium gas after the above test cycles. The amount of leakage from through the valve was determined by a leak detector to be 1×10⁻⁸ Pam³/s or less. It was confirmed by the test result that there was no leakage from the valve.

### [Comparative Example 1]

Provided was a diaphragm valve in which: a housing was formed of SUS304; a valve seat was formed by roller burnishing with a surface area Sb of 0.05 cm², a surface roughness Ra of 20.0 µm and a curvature radius R of 200 mm; and a diaphragm was formed of Inconel with a gas contact surface area Sa of 2.25 cm². This diaphragm valve was connected to a 47-L Mn steel container. The container was filled with 20% F₂/N₂ gas at a pressure of 10.0 MPaG. After the filling, the diaphragm valve was connected to vacuum gas replacement equipment. The diaphragm valve was subjected to 3000 opening/closing test cycles of being sealed with the gas, closed and subjected to vacuum replacement. The inside of the container was replaced with 5.0 MPaG of helium gas after the above test cycles. The amount of leakage from through the valve was determined by a leak detector to be 3.5×10⁻² Pam³/s. The gas tightness of the valve was poor.

### [Comparative Example 2]

Provided was a diaphragm valve in which: a housing was formed of SUS304; a valve seat was formed by roller burnishing with a surface area Sb of 0.05 cm², a surface roughness Ra of 8.0 µm and a curvature radius R of 50 mm; and a diaphragm was formed of Inconel with a gas contact surface area Sa of 2.25 cm². This diaphragm valve was connected to a 47-L Mn steel container. The container was filled with 20% F₂/N₂ gas at a pressure of 10.0 MPaG. After the filling, the diaphragm valve was connected to vacuum gas replacement equipment. The diaphragm valve was subjected to 3000 opening/closing test cycles of being sealed with the gas, closed and subjected to vacuum replacement.

The inside of the container was replaced with 5.0 MPaG of helium gas after the above test cycles. The amount of leakage from through the valve was determined by a leak detector to be 1.3×10⁻¹ Pam³/s. The gas tightness of the valve was poor.

### [Comparative Example 3]

Provided was a diaphragm valve in which: a housing was formed of SUS304; a valve seat was formed by roller burnishing with a surface area Sb of 0.0025 cm², a surface roughness Ra of 0.8 µm and a curvature radius R of 200 mm; and a diaphragm was formed of Inconel with a gas contact surface area Sa of 2.5 cm². This diaphragm valve was connected to a 47-L Mn steel container. The container was filled with 20% F₂/N₂ gas at a pressure of 10.0 MPaG. After the filling, the diaphragm valve was connected to vacuum gas replacement equipment. The diaphragm valve was subjected to 3000 opening/closing test cycles of being sealed with the gas, closed and subjected to vacuum replacement.

The inside of the container was replaced with 5.0 MPaG of helium gas after the above test cycles. The amount of leakage from through the valve was determined by a leak detector to be 7×10⁻⁸ Pam³/s. The gas tightness of the valve was not sufficient.

### [Comparative Example 4]

Provided was a diaphragm valve in which: a housing was formed of SUS304; a valve seat was formed by roller burnishing with a surface area Sb of 0.25 cm², a surface roughness Ra of 8.0 µm and a curvature radius R of 200 mm; and a diaphragm was formed of Hastelloy with a gas contact surface area Sa of 2.25 cm². This diaphragm valve was connected to a 47-L Mn steel container. The container was filled with 20% F₂/N₂ gas at a pressure of 10.0 MPaG. After the filling, the diaphragm valve was connected to vacuum gas replacement equipment. The diaphragm valve was subjected to 3000 opening/closing test cycles of being sealed with the gas, closed and subjected to vacuum replacement.

The inside of the container was replaced with 5.0 MPaG of helium gas after the above test cycles. The amount of leakage from through the valve was determined by a leak detector to be 2×10⁻² Pam³/s. The gas tightness of the valve was not sufficient.

### [Comparative Example 5]

Provided was a diaphragm valve in which: a housing was formed of SUS304; a valve seat was formed by roller burnishing with a surface area Sb of 0.4 cm², a surface roughness Ra of 0.8 µm and a curvature radius R of 50 mm; and a diaphragm was formed of Inconel with a gas contact surface area Sa of 2.25 cm². This diaphragm valve was connected to a 47-L Mn steel container. The container was filled with 20% F₂/N₂ gas at a pressure of 14.7 MPaG. After the filling, the diaphragm valve was connected to vacuum gas replacement equipment. The diaphragm valve was subjected to 3000 opening/closing test cycles of being sealed with the gas, closed and subjected to vacuum replacement.

The inside of the container was replaced with 5.0 MPaG of helium gas after the above test cycles. The amount of leakage from through the valve was determined by a leak detector to be 1.5×10⁻¹ Pam³/s. The gas tightness of the valve was poor.

The above test results are summarized in TABLE 1.

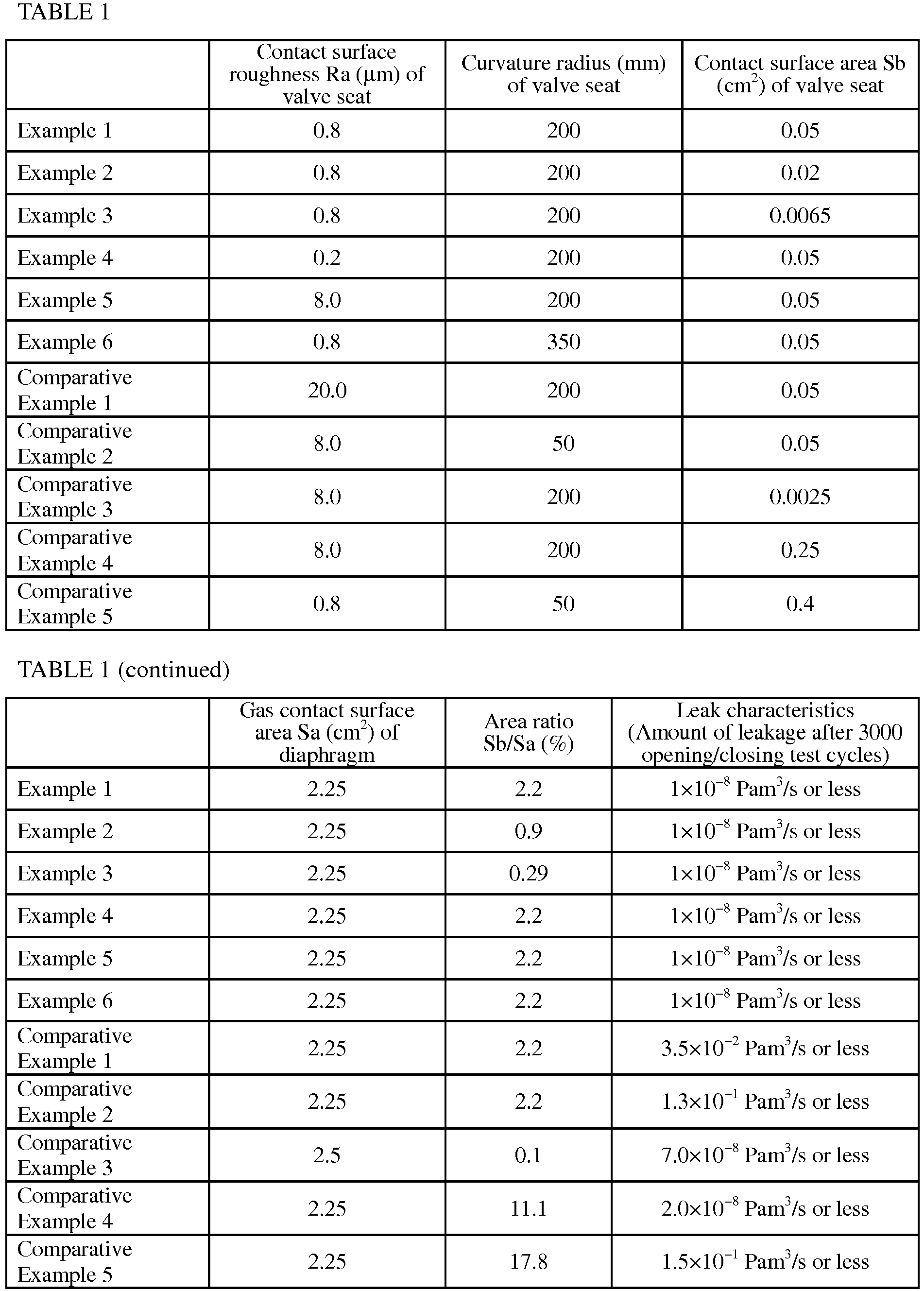

In each of Example 1 to 6, the surface roughness Ra of the valve seat contact surface, the curvature radius R of the valve seat and the ratio Sb/Sa of the contact area Sb between the diaphragm and the valve seat to the gas contact surface area Sa of the diaphragm were within the respective ranges of the present invention so that the valve had sufficient gas tightness.

On the other hand, the valve did not have sufficient gas tightness when the surface roughness Ra of the valve seat contact surface was out of the range of the present invention as is seen from Comparative Example 1. As is seen from Comparative Example 2, the valve did not have sufficient gas tightness when the curvature radius R of the valve seat was out of the range of the present invention. Further, the gas tightness of the valve was poor when the ratio Sb/Sa of the contact area Sb between the diaphragm and the valve seat to the gas contact surface area Sa of the diaphragm was out of the range of the present invention as is seen from Comparative Examples 3 to 5.

As described above, the valve according the present invention attains sufficient gas tightness and can suitably be used for the container filled with halogen gas or halogen compound gas.

Although the present invention has been described with reference to the above embodiments, various modifications and variations of the above embodiments can be made based on the knowledge of those skilled in the art without departing from the scope of the present invention as defined by the appended claims.

## Claims

1. A direct-touch diaphragm valve (1), comprising:
a valve body (2) having inlet (5) and outlet (6) passages and allowing flow of halogen gas or halogen compound gas therethrough;
a valve chamber (7) being in communication with the inlet and outlet passages;
a valve seat (12) located around an open inner end of the inlet passage;
a diaphragm (8) arranged on the valve seat so as to hermetically seal the valve chamber and open or close the inlet and outlet passages;
a stem (9) adapted to move a center portion of the diaphragm downwardly; and
a driving unit (10) adapted to move the stem in a vertical direction,
wherein the valve seat and the diaphragm have respective contact surfaces formed therebetween such that the area ratio S_{b}/Sₐ of a contact area S_{b} of the valve seat with the diaphragm to a gas contact surface area Sₐ of the diaphragm ranges from 0.2 to 10%,
the direct-touch diaphragm valve being **characterized in that** the contact surface (12a) of the valve seat has a surface roughness Ra of 0.1 to 10.0 µm and a curvature radius R of 100 to 1000 mm.

2. The direct-touch diaphragm valve according to claim 1, wherein the diaphragm has a longitudinal elastic modulus of 150 to 250 GPa.

3. The direct-touch diaphragm valve according to claim 1 or 2, wherein the diaphragm valve is attached to a high-pressure gas container in which fluorine gas is filled at a concentration of 20 to 100 vol% and a pressure of 0 to 14.7 MPaG as the halogen gas so as to flow through the valve body.

4. A high pressure gas-filled container comprising the direct-touch diaphragm valve according to any one of claims 1 to 3.

## Patentansprüche

1. Direktkontakt-Membranventil (1), umfassend
einen Ventilkörper (2), der Einlass- (5) und Auslassdurchgänge (6) aufweist und eine Strömung von Halogengas oder Halogenverbindungsgas dort hindurch zulässt;
eine Ventilkammer (7), die mit den Einlass- und Auslassdurchgängen in Verbindung steht;
einen Ventilsitz (12), der um ein offenes inneres Ende des Einlassdurchganges herum angeordnet ist;
eine Membran (8), die auf dem Ventilsitz angeordnet ist, um die Ventilkammer hermetisch abzudichten oder die Einlass- und Auslassdurchgänge zu öffnen oder zu schließen;
einen Schaft (9), der ausgebildet ist, um einen zentralen Abschnitt der Membran nach unten zu bewegen; und
eine Antriebseinheit (10), die ausgebildet ist, um den Schaft in einer vertikalen Richtung zu bewegen,
wobei zwischen dem Ventilsitz und der Membran jeweilige Kontaktflächen gebildet sind, so dass das Flächenverhältnis S_{b}/Sₐ einer Kontaktfläche S_{b} des Ventilsitzes mit der Membran zu einer Gaskontaktoberfläche Sₐ der Membran in einem Bereich von 0,2 bis 10 % liegt, wobei das Direktkontakt-Membranventil **dadurch gekennzeichnet ist, dass** die Kontaktfläche (12a) des Ventilsitzes eine Oberflächenrauheit Ra von 0,1 bis 10,0 µm und einen Krümmungsradius R von 100 bis 1000 mm aufweist.

2. Direktkontakt-Membranventil nach Anspruch 1, wobei die Membran einen Längselastizitätsmodul von 150 bis 250 GPa aufweist.

3. Direktkontakt-Membranventil nach Anspruch 1 oder 2, wobei das Membranventil an einem Hochdruckgasbehälter angebracht ist, in welchen Fluorgas mit einer Konzentration von 20 bis 100 Vol-% und einem Druck von 0 bis 14,7 MPaG als das Halogengas eingefüllt ist, um durch den Ventilkörper hindurchzuströmen.

4. Mit Hochdruckgas gefüllter Behälter, der das Direktkontakt-Membranventil nach einem der Ansprüche 1 bis 3 umfasst.

## Revendications

1. Valve à diaphragme à contact direct (1), comprenant un corps de valve (2) ayant un passage d'entrée (5) et un passage de sortie (6) et permettant la traversée de celui-ci par un flux de gaz halogène ou d'un composé halogène gazeux ;
une chambre de valve (7) qui est en communication avec le passage d'entrée et le passage de sortie ;
un siège de valve (12) situé autour d'une extrémité intérieure ouverte du passage d'entrée ;
un diaphragme (8) agencé sur le siège de valve de manière à étancher hermétiquement la chambre de valve et ouvrir ou fermer le passage d'entrée et le passage de sortie ;
une tige (9) adaptée à déplacer une portion centrale du diaphragme en direction du bas ; et
une unité d'entraînement (10) adaptée à déplacer la tige dans une direction verticale,
dans laquelle le siège de valve et le diaphragme ont des surfaces de contact respectives formées entre elles de telle façon que le rapport de superficie Sb/Sa d'une zone de contact Sb du siège de valve avec le diaphragme sur une superficie de contact de gaz Sa du diaphragme est dans la plage de 0,2 à 10 %,
la valve à diaphragme à contact direct étant **caractérisée en ce que** la surface de contact (12a) du siège de valve a une rugosité de surface Ra de 0,1 à 10,0 µm et un rayon de courbure R de 100 à 1000 mm.

2. Valve à diaphragme à contact direct selon la revendication 1, dans laquelle le diaphragme présente un module d'élasticité longitudinal de 150 à 250 GPa.

3. Valve à diaphragme à contact direct selon la revendication 1 ou 2, dans laquelle la valve à diaphragme est attachée sur un conteneur de gaz à haute pression dans lequel du fluor gazeux est rempli à une concentration de 20 à 100 % en volume et une pression de 0 à 14,7 MPaG à titre d'halogène gazeux de manière à s'écouler à travers le corps de valve.

4. Conteneur rempli de gaz sous haute pression comprenant la valve à diaphragme à contact direct selon l'une quelconque des revendications 1 à 3.
